# DEMANDE DE BREVET EUROPEEN

(11) **EP 1 318 289 A1**
(43) Date de publication de la demande: **11.06.2003**
(21) Numéro de dépôt: 02293026.7
(22) Date de dépôt: 06.12.2002
(51) Int. Cl.: F02D 41/40, F01N 3/023, F01N 3/025, F01N 3/035

(54) **Dispositif de post traîtement des gaz d'échappement et procédé de regénération du dispositif**

(30) Priorité: 07.12.2001 FR 0115831
(71) Demandeur: Renault s.a.s., 92100 Boulogne Billancourt (FR)
(72) Inventeur: Da Silva, Manuel, 91590 La Ferté Alais (FR); Guyon, Marc, 91290 Arpajon (FR); Tachy, Christophe, 91790 Boissy s/s yon (FR)

(57) **Abrégé**

Dispositif de post traitement des gaz d'échappement, comprenant notamment un filtre 16 à particules, une phase catalytique intégrée au filtre 16 à particule caractérisé en ce que les zones du filtre à particule dans lesquelles sont piégées les particules comprennent au moins un élément chimique favorisant l'oxydation des éléments réducteurs dans les gaz d'échappement par réaction exothermique.

## Description

La présente dispositif de post traitement des gaz d'échappement comprenant un filtre à particules revêtu ou contenant une phase catalytique. La régénération du système de post traitement des gaz d'échappement consistant notamment en une combustion des particules stockées dans le filtre.

Il existe des solutions pour diminuer les émissions polluantes, le filtre à particules et le catalyseur d'oxydation en font parties. Dans ce type de système le filtre à particules se colmate et il est donc nécessaire de le régénérer périodiquement.

Pour provoquer la combustion des particules, il faut les porter à leur température de combustion qui est d'environ 550°C. Cependant, les gaz d'échappement des moteurs diesels n'atteignent que rarement cette température puisque, par exemple en ville, la température des gaz d'échappement évolue entre 150 et 250°C. Il faut alors augmenter spécifiquement la température des gaz d'échappement, lors de la phase de régénération, de façon qu'ils atteignent la température de combustion des particules dans le filtre à particules.

Différents systèmes ont été proposés. Des systèmes de chauffage par résistance électrique, notamment par des grilles chauffantes, permettent de porter la température des gaz d'échappement à une valeur suffisante pour provoquer la combustion des particules dans le filtre. Cependant, ces systèmes nécessitent une puissance électrique importante qu'il n'est pas toujours possible de fournir. De plus, ils compliquent la conception de la ligne d'échappement.

D'autres systèmes proposent d'augmenter la température des gaz échappement par l'injection d'une quantité supplémentaire de carburant dans au moins une des chambres de combustion sous la forme d'une post injection. C'est-à-dire, qu'après avoir injecté la quantité de carburant nécessaire au fonctionnement "classique" du moteur, une quantité supplémentaire de carburant est injectée dans un second temps. Une partie de cette quantité de carburant additionnelle s'enflamme en produisant une augmentation de la température des gaz d'échappement, le reste de cette quantité est transformé en produits d'oxydation partielle comme le monoxyde de carbone CO et les hydrocarbures HC.

Pour que la température atteigne la température de combustion des suies, il est nécessaire que les produits d'oxydation partielle réagissent par des réactions exothermiques avant leur arrivée dans le filtre à particules. Les réactions exothermiques sont obtenues lors de la traversée d'un catalyseur d'oxydation.

Ce système nécessite donc la présence d'un catalyseur d'oxydation en amont du filtre à particules et un système d'injection apte à produire la post-injection.

La présente invention a pour but un dispositif de post traitement des gaz d'échappement permettant de réduire la surconsommation lié aux régénérations du filtre à particules.

Ce but est atteint par un dispositif de post traitement des gaz d'échappement, comprenant notamment un filtre à particules, une phase catalytique intégrée au filtre à particule caractérisé en ce que les zones du filtre à particule dans lesquelles sont piégées les particules comprennent au moins un élément chimique favorisant l'oxydation des éléments réducteurs dans les gaz d'échappement par réaction exothermique.

D'autres particularités et avantages de la présente invention apparaîtront plus clairement dans la description ci-après faite en référence aux dessins annexés dans lesquels :
la figure 1 représente schématiquement une ligne d'échappement d'un moteur à combustion interne équipé d'un catalyseur d'oxydation et d'un filtre à particule.

Les figures 2A et 2B représentent différents diagrammes représentant les quantité de carburant injectées en fonction de l'angle du vilebrequin par rapport à point mort haut,

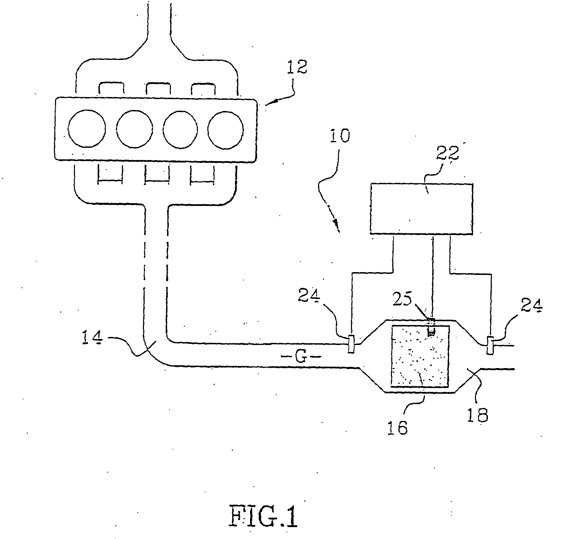

On a représenté sur la figure 1, un système de traitement 10 des gaz d'échappement G d'un moteur à combustion 12. Le moteur 12 est un moteur diesel ou un moteur à essence fonctionnant en mélange pauvre tel qu'un moteur à essence à injection directe.

Une ligne 14 d'échappement permet l'évacuation des gaz G du moteur vers l'atmosphère. Un système de traitement destiné à purifier les gaz d'échappement G est interposé dans la ligne. 14. Il se compose principalement d'un filtre à particules 16 agencé dans une chambre 18.

Le filtre à particules 16 se présente avec une face d'entrée et une face de sortie des gaz G. Il est composé de façon connue en soit par exemple de canaux alternativement bouchés et ouverts en entrée et qui sont inversement ouverts et bouchés en sortie. Les parois du filtre à particules 16 sont poreuses. Le filtre à particule 16 comprend une imprégnation catalytique que sera décrite ultérieurement.

L'injection du carburant dans le moteur 12 est commandée par un système électronique de commande 22 qui permet de gérer la loi d'injection de carburant dans les chambres de combustions. Des moyens de mesure, tels que des capteurs 24 de pression et/ou des capteurs 25 de température, sont disposés sur la ligne d'échappement et sont reliés au système électronique de commande 22.

Le fonctionnement du système de traitement 10 selon l'état de la technique, par exemple décrit dans la demande française FR2799508 déposée par la demanderesse, est le suivant.

Les gaz d'échappement G produits par le moteur 12 sont envoyés dans la ligne 14. Lors de leur passage dans la chambre 18, les particules contenues dans les gaz G sont arrêtées par le filtre à particules 16.

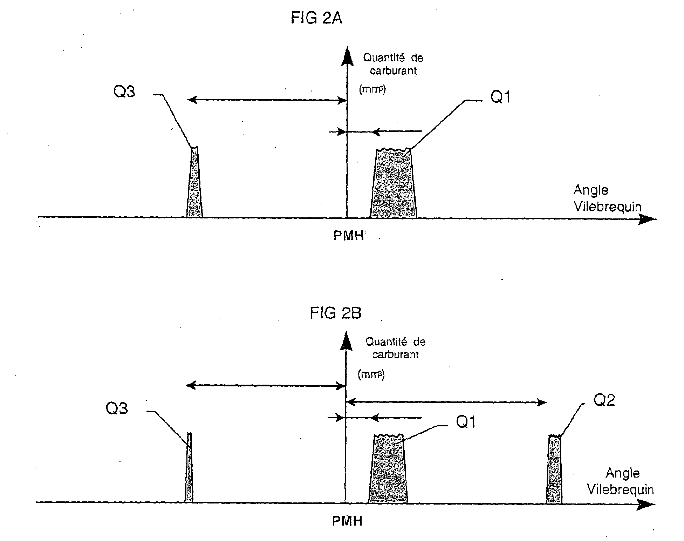

La figure 2A représente le diagramme d'injection lors du fonctionnement normale du moteur. Pendant ce mode de fonctionnement, une quantité principale Q1 de carburant est injectée au voisinage du point mort haut PMH.

Périodiquement les particules ainsi piégées dans le filtre à particules 16 sont brûlées au cours d'une phase de régénération.

Les moyens de mesure 24, 25 transmettent au système électronique de commande 22 des informations représentatives du niveau de chargement du filtre à particules 16.

Le système électronique de commande 22 prend en compte le niveau de chargement du filtre à particules, ainsi que le point de fonctionnement du moteur, pour déclencher la phase de régénération.

La régénération du filtre à particules 16 nécessite d'atteindre une température supérieure ou égale à la température de combustion des particules, c'est-à-dire d'environ 550°C. Il faut donc, dans certains cas, augmenter la température des gaz d'échappement.

Plusieurs solutions peuvent être mises en oeuvre de façon indépendante ou concomitante.

Parmi celles-ci, conformément à la figure 2B, une quantité supplémentaire Q2 de carburant pour chauffer les gaz d'échappement G, est injectée dans la chambre de combustion du moteur après l'injection, au voisinage du point mort haut. PMH, d'une quantité principale de carburant Q1 destinée à fournir le couple moteur.

La quantité supplémentaire Q2 post-injectée subit une combustion partielle, qui fournit quasiment uniquement de l'énergie thermique, dont les produits d'oxydation partielle vont ensuite s'oxyder dans la ligne 14 d'échappement et provoquer une élévation de la température des gaz d'échappement G. L'oxydation se produit principalement lors de la traversée du filtre 16 à particule au contact de la phase catalytique.

Le retard d'injection de la post-injection par rapport au point mort haut PMH du piston est compris entre selon l'invention entre 60 et 80 degrés du vilebrequin.

D'autres stratégies d'injection de carburant ont pour objectif d'augmenter la quantité d'éléments réducteurs, tels que CO hydrocarbures et/ou hydrogène pour provoquer une montée plus rapide en température d'un catalyseur d'oxydation placée dans la ligne d'échappement. En règle générale, ces stratégies ont pour but de provoquer une combustion partielle d'une partie du carburant injecté.

Selon une deuxième méthode tirée de l'état de la technique et illustrée dans les figures 2A et 2B, il est connu d'injecter une quantité prédéterminée Q3 ou quantité pilote, avant l'injection de la quantité Q1 correspondant à l'injection principale. Selon une variante de l'invention, la quantité pilote est injecté entre 30 et 35° avant le PHM . La quantité Q3 peut servir à diminuer le bruit lié à la combustion de la quantité principale motrice Q1.

L'invention se propose d'optimiser l'utilisation des différentes stratégies décrites précédemment de façon à notamment de réduire au strict nécessaire les quantités Q1, Q2, et Q3 et de déterminer précisément les angles vilebrequin des différentes injections. Cette optimisation ayant notamment comme résultat de réduire la surconsommation liée à la régénération.

Selon l'invention, la structure filtrante, par exemple, les canaux du filtre à particule dans lesquels sont piégées les. particules sont recouverts ou incorporent des éléments chimiques favorisant l'oxydation par réaction exothermique des éléments réducteurs, tels que le CO, les hydrocarbures et/ou l'hydrogène présents dans les gaz d'échappement. Ces éléments chimiques sont choisis parmi les oxydes métalliques, le paladium, l'or ou le platine, le platine étant l'élément préféré. Ainsi, les calories dégagées par l'exothermicité des réactions d'oxydation sont directement et immédiatement transférées aux particules de suies piégées dans le filtre à particules et favorise leur combustion. Les pertes d'énergie thermique sont donc très réduites. En effet, l'énergie thermique est quasi intégralement utilisée pour brûler les particules. Ainsi, contrairement à la solution de l'art antérieur qui provoque un réchauffement des gaz d'échappement dans leur ensemble, la solution proposée réchauffe l'atmosphère localement et uniquement à proximité des particules piégées dans le filtre à particules.

Selon l'invention, si un catalyseur d'oxydation est mis en place dans la ligne d'échappement il doit nécessairement être placé en aval du filtre 16 à particules. En effet, le catalyseur d'oxydation ne doit pas consommer les éléments réducteurs destinés à élever la température du filtre à particules.

Le besoin d'énergie thermique pour provoquer la combustion des particules piégées dépend dans la température des gaz d'échappement entrant dans le filtre 16 à particules. Plus cette température est faible, plus la quantité d'éléments réducteurs devant être oxydés sur la phase catalytique du filtre 16 à particule est importante. Ainsi, les stratégies décrites précédemment sont ajustées pour augmenter ou diminuer la concentration d'éléments réductrice en fonction de la température d'échappement. Cette ajustement consiste à modifier les quantités de carburant des différents injection ainsi que les valeurs des angles vilebrequin auquel les différentes injection sont réalisées.

A titre indicatif le tableau ci-dessous montre la proportion d'éléments réducteur que doit comporter les gaz d'échappement en fonction de la température des gaz d'échappement. Ce tableau peut être exploité par l'unité de commande 22 pour déterminer les quantités Q1, Q2, et Q3 et les angles vilebrequin des différentes injections afin d'obtenir la concentration souhaitée :

| Réducteur en % | Température d'échappement en °C |
|---|---|
| 0% à ±0,5% | 600°C |
| 1% à ±0,5% | 500°C |
| 2% à ±0,5% | 400°C |
| 3% à ±0,5% | 300°C |
| 4% à ±0,5% | 200°C |

Bien entendu, l'invention n'est pas limitée au mode de réalisation qui vient d'être décrit qu'à titre d'exemple.

## Revendications

1. Dispositif de post traitement des gaz d'échappement, comprenant notamment un filtre 16 à particules, une phase catalytique intégrée au filtre 16 à particule **caractérisé en ce que** les zones du filtre à particule dans lesquelles sont piégées les particules comprennent au moins un élément chimique favorisant l'oxydation des éléments réducteurs dans les gaz d'échappement par réaction exothermique.

2. Dispositif de post traitement des gaz d'échappement selon la revendication 1, **caractérisé en ce que** les éléments chimiques sont choisis parmi la liste suivantes, oxydes métalliques, paladium, or, platine.

3. Procédé de régénération d'un système de post traitement des gaz d'échappement, le système de post traitement comprenant notamment le dispositif selon la revendication 1 ou 2, **caractérisé en ce que** le procédé comprend
· une étape d'injection une quantité déterminé de carburant en une ou plusieurs injections à des angles vilebrequin déterminés, la quantité de chaque injection et les angles vilebrequin sont déterminés pour augmenter d'une quantité déterminée la concentration des éléments réducteurs dans les gaz d'échappement en fonction de la température de ces mêmes gaz.

4. Procédé de régénération selon la revendication 3, **caractérisé en ce que** l'étape d'injection comprend une injection d'une quantité principale Q1 de carburant au voisinage du point mort haut, et d'une quantité Q2 additionnelle de carburant, appelée post-injection, injectée après la quantité principale.

5. Procédé de selon la revendication 4, **caractérisé en ce que caractérisé en ce que** le retard à l'injection pour la post-injection Q2 est compris entre 60° et 80° après le point mort haut.

6. Procédé de régénération selon la revendication 4 ou 5, **caractérisé en ce qu'**il comprend en plus de la post-injection Q2, une injection supplémentaire appelée quantité pilote Q3, injectée avant l'injection principale de carburant avec un angle déterminé avant le point mort haut, l'angle étant compris entre 30 et 35° avant le PHM .

7. Procédé de régénération selon l'une des revendications 3 à 6, **caractérisé en ce que** la quantité de chaque injection et les angles vilebrequin sont déterminés pour que :
· lorsque la température des gaz d'échappement est comprise entre 400 et 600°C, le pourcentage de réducteurs dans les gaz d'échappement est compris entre 0 et 2%
· lorsque la température des gaz d'échappement est comprise entre 300 et 500°C, le pourcentage de réducteurs dans les gaz d'échappement est compris entre 0,5 et 3,5%
· lorsque la température des gaz d'échappement est comprise entre 200 et 400°C, le pourcentage de réducteurs dans les gaz d'échappement est compris entre 1,5 et 4,5%.
